# EUROPÄISCHE PATENTSCHRIFT

(11) **EP 3 974 788 B1**
(45) Veröffentlichungstag und Bekanntmachung des Hinweises auf die Patenterteilung: **13.12.2023**
(21) Anmeldenummer: 20197976.2
(22) Anmeldetag: 24.09.2020
(51) Int. Cl.: G01G 7/04

(54) **MAGNETSCHWEBEWAAGE**
MAGNETIC SUSPENSION BALANCE
BALANCE À SUSPENSION MAGNÉTIQUE

(43) Veröffentlichungstag der Anmeldung: 30.03.2022
(73) Patentinhaber: Rubolab GmbH, 09599 Freiberg (DE)
(72) Erfinder: Wehberg, Marc, 58135 Hagen (DE); Fieback, Tobias, 09599 Freiberg (DE)
(74) Vertreter: Pfenning, Meinig & Partner mbB

(56) Entgegenhaltungen:
- DE-A1-102013 015 342
- DE-B3-102009 009 204

## Beschreibung

Die vorliegende Erfindung betrifft eine Magnetschwebewaage mit einer Steuer-/Regeleinheit sowie ein Verfahren zum Kalibrieren und Betrieben und ein Verfahren zum Überwachen der Magnetschwebewaage.

Bei Magnetschwebewaagen wie der in dem Patent DE 10 2009 009 204 B3 beschriebenen wird ein zu vermessender Probenkörper mittels einer Schweberegelung vermessen. Den Vorteilen derartiger Geräte wie einer reibungslosen Lagerung stehen aber auch Nachteile gegenüber. Aufgrund des anspruchsvollen physikalischen Messprinzips ist eine präzise und fehlerfreie Ansteuerung schwierig zu erreichen und im Fehlerfall kann die Probe aufgrund ihres Schwebezustands leicht beschädigt werden. Zudem ist die Einrichtung sehr anspruchsvoll und kann nur von ausgebildeten Spezialisten vorgenommen werden. Aus der Entgegenhaltung DE 10 2013 015 342 A1 ist ein dynamisch-gravimetrisches Verfahren zum Bestimmen der Menge von Gasen und Dämpfen, die in dichten oder porösen Feststoffen gelöst sind, bekannt.

Der vorliegenden Erfindung liegt daher die Aufgabe zugrunde, eine Magnetschwebewaage und ein Verfahren zum Betreiben der Magnetschwebewaage vorzusehen, mit denen die genannten Nachteile vermeiden werden, also eine präzise Ansteuerung der Magnetschwebewaage ohne Beschädigung der Probe selbst im Fehlerfall erfolgen kann und die von üblichem Laborpersonal in Betrieb genommen werden kann.

Diese Aufgabe wird erfindungsgemäß gelöst durch eine Magnetschwebewaage nach dem Hauptanspruch und ein Verfahren nach dem nebengeordneten Anspruch. Vorteilhafte Ausgestaltungen und Weiterbildungen sind in den abhängigen Ansprüchen beschrieben.

Eine Magnetschwebewaage weist eine Haltevorrichtung mit einer Messlastabkopplung zum Aufnehmen einer zu vermessenden Probe, ein an der Haltevorrichtung angeordnetes Magnetelement, einen Elektromagneten und einen Positionssensor auf. Der Positionssensor ist durch eine Sensorspule und eine an der Haltevorrichtung angeordnete Sensorhülse realisiert. Die Haltevorrichtung ist zum Aufnehmen der zu vermessenden Probe bzw. eines zu vermessenden Probenkörpers ausgebildet. Der Elektromagnet ist eingerichtet, eine Magnetkraft auf das Magnetelement auszuüben. Der Positionssensor schließlich ist dazu ausgebildet, eine vertikale Position des Magnetelements zu ermitteln bzw. zu detektieren. Die Haltevorrichtung, die zu vermessende Probe und das Magnetelement sind innerhalb eines Gehäuses angeordnet, der Elektromagnet ist außerhalb des Gehäuses angeordnet. Die Magnetschwebewaage weist ferner eine Steuer-/Regeleinheit auf, die dazu eingerichtet ist, die Haltevorrichtung mit dem daran angeordneten Magnetelement hinsichtlich einer definierten oder vorgegebenen Position der Haltevorrichtung zu kalibrieren und während eines Messvorgangs zu überwachen sowie derart stabil zu halten, dass die Gewichtskraft über den Elektromagneten und das Magnetelement auf eine Präzisionswaage übertragen werden kann.

Durch die Steuer-/Regeleinheit, die typischerweise als elektronische bzw. elektrische Baugruppe vorliegt, wird eine automatisierte Kalibrierung und Überwachung des Messvorgangs ermöglicht. Zudem kann durch diese Einheit auch in einem Fehlerfall, beispielsweise bei einem Stromausfall, noch bis zu einem gewissen Grad eingegriffen werden, um Beschädigungen der Probe zu vermeiden. Die definierte oder vorgegebene Position der Haltevorrichtung ist hierbei derart zu verstehen, dass es sich um eine vorab definierte und somit also vorgegebene Position handelt, so dass anstelle des Begriffs "definierte oder vorgegebene Position" auch "definierte und/oder vorgegebene Position" geschrieben werden kann.

Das Magnetelement ist mit der Haltevorrichtung typischerweise starr verbunden bzw. ortsfest an der Haltevorrichtung befestigt, um eine eindeutige räumliche Beziehung zwischen beiden Objekten zu erreichen. Vorzugsweise ist das Magnetelement an einem dem Elektromagneten zugewandten Ende der Haltevorrichtung angeordnet. Dieses Ende ist typischerweise ein oberes Ende, d. h. der Elektromagnet befindet sich oberhalb der Haltevorrichtung. Bei dem Magnetelement selbst kann es sich um ein Element aus einem bei Raumtemperatur ferromagnetischen oder magnetisierbaren Werkstoff handeln.

Die Steuer-/Regeleinheit überwacht ein von dem Positionssensor übermitteltes elektrisches Spannungssignal und bzw. oder ein von dem Positionssensor übermitteltes elektrisches Stromsignal und führt während des Messvorgangs bei Überschreiten und bzw. oder Unterschreiten eines vorab definierten Grenzwerts eine Regelung durch. Durch die Regelung kann die Haltevorrichtung wieder in einen als akzeptabel angesehenen Raumbereich zurückgeführt werden, beispielsweise um Kollisionen mit anderen Objekten oder eine Überhitzung des Elektromagneten zu vermeiden.

Die Steuer-/Regeleinheit ist zum Durchführen und bzw. oder beim Durchführen der Regelung dazu ausgebildet, zumindest einen von dem Positionssensor übermittelten Sensorzustand auf Plausibilität zu prüfen und, falls ein Fehlerzustand detektiert wird, eine Nachregelung durchzuführen oder, falls die Nachregelung nicht möglich ist, das Magnetelement mitsamt der Haltevorrichtung, der Messlastabkopplung und der Probe kontrolliert abzusetzen oder, falls die kontrollierte Absetzung nicht möglich ist, den Elektromagneten komplett abzuschalten. Durch diesen mehrstufigen Aufbau der Regelung kann eine Beschädigung der zu untersuchenden Probe weitestgehend vermieden werden, da im Normalbetrieb, d. h. ohne auftretenden Fehler, durch die Plausibilitätsprüfung eine zuverlässige Überwachung gegeben ist, beim Auftreten von Fehlern zunächst über das Nachregeln ein Ausgleich angestrebt wird und nur falls dies nicht geht, der Absetzvorgang eingeleitet wird. Nur wenn auch dies nicht funktioniert, wird eine komplette Abschaltung der Energiezufuhr des Elektromagneten vorgenommen, um weitergehende Schäden zu vermeiden.

Alternativ oder zusätzlich kann vorgesehen sein, dass die Steuer-/Regeleinheit ein von dem Positionssensor übermitteltes elektrisches Spannungssignal und bzw. oder ein von dem Positionssensor übermitteltes elektrisches Stromsignal überwacht und während eines Kalibriervorgangs automatisiert mindestens zwei Extrempositionen der Haltevorrichtung als obere Begrenzung durch das Gehäuse und als untere Begrenzung den größtmöglichen Abstand zwischen dem Magnetelement und dem Elektromagneten, bei dem die Magnetkraft gerade noch für einen sicheren Schwebezustand ausreicht, durch den Elektromagneten anfährt sowie ein von dem Positionssensor übermitteltes elektrisches Spannungssignal und bzw. oder ein von dem Positionssensor übermitteltes elektrisches Stromsignal detektiert. Durch die automatische bzw. automatisierte Kalibrierung kann die Regelung automatisiert die Einstellpositionen für die Probe und die gegebenenfalls verwendete weitere Probe vorgeben, so dass eine Messung zuverlässiger durchgeführt werden kann und die aufwendige Inbetriebnahme durch ausgebildete Spezialisten entfallen kann.

Es kann dabei vorgesehen sein, dass die Steuer-/Regeleinheit dazu eingerichtet ist, während des Kalibriervorgangs genau die zwei Positionen anzufahren, von denen die erste Position ein oberes Ende des Gehäuses ist, in der das Magnetelement einen minimalen Abstand zu dem Elektromagneten aufweist und die zweite Position eine untere Position ist, an der die von dem Elektromagneten auf das Magnetelement ausgeübte Kraft gerade ausreichend ist, um das Magnetelement zu halten. Durch diese zwei Positionen ist der maximal mögliche Verfahrweg bekannt und die Magnetschwebewaage kann nachfolgend innerhalb dieser Grenzen betrieben werden.

Die Steuer-/Regeleinheit weist ein Überwachungselement auf, das eingerichtet ist, eine elektrische Energieversorgung der des Elektromagneten und des Positionssensors zu gewährleisten und zu überwachen. Hierdurch wird die Betriebssicherheit aufgrund der kontinuierlichen Überwachung der Energieversorgung gewährleistet und eine Ausfallsicherheit erhöht.

Die Steuer-/Regeleinheit kann alternativ oder zusätzlich auch dazu eingerichtet sein, den Elektromagneten bei einem Ausfall der elektrischen Energieversorung der Magnetschwebewaage über einen vorab definierten Zeitraum mit elektrischer Energie zu versorgen, so dass das Magnetelement und damit die Haltevorrichtung automatisiert in eine Ruheposition bewegbar sind. Dies kann beispielsweise durch Vorsehen entsprechend ausgestalteter Kondensatoren erfolgen. Durch die automatisierte Bewegung in die Ruheposition kann die Haltevorrichtung und damit die daran befestigte Probe sicher abgesetzt werden, ohne dass es zu Beschädigungen an einem der Bauteile kommt.

An dem Elektromagneten kann ein mit der Steuer-/Regeleinheit verbundener Temperatursensor angeordnet sein, mit dem eine Temperatur des Elektromagneten überwacht wird. Die Steuer-/Regeleinheit ist in diesem Fall dazu eingerichtet, bei Überschreiten eines vorab definierten Temperaturgrenzwerts der Temperatur des Elektromagneten diese automatisiert bzw. automatisch abzuschalten. Dies ermöglicht es, eine Beschädigung des Elektromagneten zu vermeiden und dementsprechend die Betriebssicherheit zu erhöhen. Alternativ oder zusätzlich kann auch auf ein Widerstandsthermometer zurückgegriffen werden. Dieses Widerstandsthermometer ist in besonders bevorzugter Weise durch eine Spulenwicklung des Elektromagneten realisiert, die hinsichtlich ihres temperaturabhängigen elektrischen Widerstands überwacht wird. Zeitlich simultan zur Magnetkrafterzeugung wird dabei der elektrische Widerstand detektiert und die Steuer-/Regeleinheit ist wie bei der Verwendung des Temperatursensors dazu eingerichtet ist, bei Überschreiten eines Temperaturgrenzwerts der Temperatur des Elektromagneten diesen automatisiert in eine sichere Position zu verfahren und danach abzuschalten.

Die Magnetschwebewaage kann eine mit der Steuer-/Regeleinheit verbundene Speichereinheit aufweisen, in der von der Steuer-/Regeleinheit ermittelte Daten wie beispielsweise Kalibrierpositionen oder Messwerte hinterlegt sind. Die Speichereinheit kann auch als mobile Speichereinheit ausgestaltet sein, beispielsweise als von der Steuer-/Regeleinheit entfernbarer Datenträger.

Es kann vorgesehen sein, dass die Haltevorrichtung dazu ausgebildet ist, zusätzlich zu der zu vermessenden Probe eine inerte Probe zum Bestimmen der Dichte eines umgebenden Messgases aufzunehmen. Die inerte Probe wird typischerweise zusätzlich zu der zu vermessenden Probe verwendet, es kann aber auch vorgesehen sein, statt der inerten Probe eine weitere zu vermessende Probe zu verwenden.

Das Gehäuse weist typischerweise einen Einlass und einen Auslass auf, durch den das Messgas eingelassen und wieder ausgelassen werden kann. Das Gehäuse kann fluiddicht ausgestaltet sein und durch den Einlass ein bestimmtes Gas eingeführt sowie durch den Auslass wieder aus dem Gehäuse entfernt werden, so dass die Probe in verschiedenen Umgebungen vermessen werden kann. Die Sensorspule des Positionssensors kann in einem Innenraum des Gehäuses angebracht und kabelgebunden oder kabellos mit der Steuer-/Regeleinheit verbunden, ist aber in der Regel außerhalb des Gehäuses angeordnet. Die Steuer-/Regeleinheit ist typischerweise ebenfalls außerhalb des Gehäuses angeordnet, kann aber auch innerhalb des Gehäuses angeordnet oder in das Gehäuse integriert sein. Vorzugsweise ist die Steuer-/Regeleinheit ein Mikroprozessor bzw. eine elektronische Baugruppe mit einem oder mehreren Mikroprozessoren.

Bei einem Verfahren zum Kalibrieren und Betreiben einer Magnetschwebewaage wird eine Haltevorrichtung mit einem an der Haltevorrichtung angeordneten Magnetelement durch eine Steuer-/Regeleinheit hinsichtlich ihrer vertikalen Position kalibriert, indem die Haltevorrichtung mit dem daran angeordneten Magnetelement zu mindestens zwei Positionen durch einen Elektromagneten translatorisch bewegt wird und an den Positionen das Magnetelement durch den Elektromagneten , der eine Magnetkraft auf das Magnetelement ausübt, gehalten wird. Durch einen Positionssensor wird eine jeweilige Position des Magnetelements ermittelt, wobei nach dem Kalibrieren eine zu vermessende Probe an der Haltevorrichtung angebracht wird und die Position der Haltevorrichtung durch die Steuer-/Regeleinheit überwacht wird. Die Steuer-/Regeleinheit gewährleistet und überwacht eine elektrische Energieversorgung des Elektromagneten und des Positionssensors und überwacht ein von dem Positionssensor übermitteltes elektrisches Spannungssignal und/oder ein von dem Positionssensor übermitteltes elektrisches Stromsignal. Während des Messvorgangs bei Überschreiten und/oder Unterschreiten eines vorab definierten Grenzwerts wird eine Regelung durchgeführt sowie beim Durchführen der Regelung zumindest ein von dem Positionssensor übermittelter Sensorzustand auf Plausibilität geprüft und, falls ein Fehlerzustand detektiert wird, eine Nachregelung durchgeführt wird oder, falls die Nachregelung nicht möglich ist, das Magnetelement mitsamt der Haltevorrichtung, der Messlastabkopplung und der Probe kontrolliert abgesetzt oder, falls die kontrollierte Absetzung nicht möglich ist, der Elektromagnet komplett abgeschaltet wird. Dies ermöglicht einen zuverlässigen und wenig fehleranfälligen Betrieb der Magnetschwebewaage und eine Inbetriebnahme durch normales Laborpersonal.

Das beschriebene Verfahren wird typischerweise mit der beschriebenen Magnetschwebewaage durchgeführt, d. h. die beschriebene Magnetschwebewaage ist zum Durchführen des beschriebenen Verfahrens ausgebildet.

Bei einem vorteilhaften, aber nicht von der Erfindung umfassten Verfahren zum kontinuierlichen Überwachen von Regelparametern einer Steuer-/Regeleinheit einer Magnetschwebewaage werden Parameteränderungen aufgrund von zeitlicher und temperaturbedingter Alterung elektronischer Bauteile detektiert und durch einen in der Steuer-/Regeleinheit implementierten Optimierungsalgorithmus Werte von digital veränderbaren elektronischen Bauelementen angepasst, um eine langzeitstabile Regelgenauigkeit zu erhalten. Die Bauelemente sind typischerweise in der Steuer-/Regeleinheit verbaut.

Auch dieses Verfahren wird typischerweise mit der beschriebenen Magnetschwebewaage durchgeführt, d. h. die beschriebene Magnetschwebewaage ist zum Durchführen dieses beschriebenen Verfahrens ausgebildet. Zudem kann auch vorgesehen sein, die beiden beschriebenen Verfahren miteinander zu koppeln, d. h. dass bei dem Verfahren zum Kalibrieren und Betreiben der Magnetschwebewaage das Verfahren zum kontinuierlichen Überwachen von Regelparametern parallel durchgeführt wird.

Die vorliegende Erfindung betrifft ferner ein Computerprogrammprodukt mit einem Computerprogramm, das Softwaremittel zur Durchführung eines der beschriebenen Verfahren und bzw. oder zum Ansteuern der beschriebenen Magnetschwebewaage aufweist, wenn das Computerprogramm in einem Automatisierungssystem wie beispielsweise einem Computer oder der Steuer-/Regeleinheit ausgeführt wird.

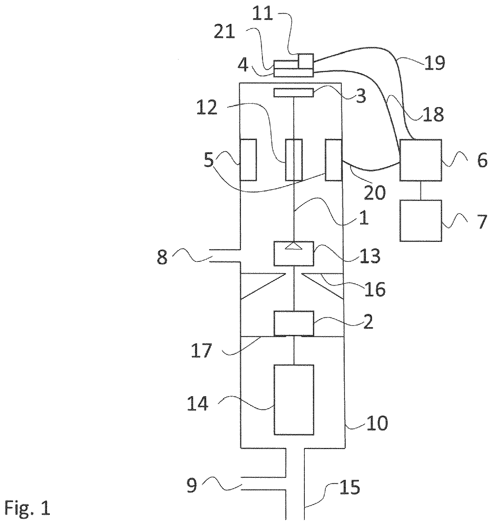

Ein Ausführungsbeispiel der Erfindung ist in der Zeichnung dargestellt und wird nachfolgend anhand von Figur 1 erläutert.

Figur 1 zeigt in einer schematischen Schnittansicht eine Magnetschwebewaage. Innerhalb eines metallischen Gehäuses 10 ist eine als Stab ausgestaltete Haltevorrichtung 1 angeordnet. An ihrem oberen Ende weist die Haltevorrichtung 1 ein fest mit der Haltevorrichtung 1 verbundenes Magnetelement 3 in Form eines Permanentmagneten auf. An einem entgegengesetzten unteren Ende der Haltevorrichtung 1 ist eine Messlastabkopplung 13 ausgebildet, an der ein Probenkörper 2 hängend an der Haltevorrichtung 1 befestigt werden kann. Dem Magnetelement 3 fluchtend gegenüberliegend ist außerhalb des Gehäuses 10 und durch das Gehäuse 10 räumlich voneinander getrennt ein Elektromagnet 4 angeordnet, durch den eine Magnetkraft auf das Magnetelement 3 ausgeübt werden kann, so dass das Magnetelement 3, die Haltevorrichtung 1 und der Probenkörper 2 translatorisch bewegbar sind und schwebend in einer vertikalen Position gelagert werden können. Unter einer vertikalen Position soll im Rahmen dieser Schrift insbesondere eine Position verstanden werden, bei der das Haltelement 1 parallel zu einer Gravitationsrichtung angeordnet ist, wobei hierbei auch Abweichungen von bis zu 10°, vorzugsweise von bis zu 5° von dieser Richtung noch als parallel angesehen werden sollen. Oberhalb des Elektromagneten 4 und mit diesem in direktem, also unmittelbar berührenden Kontakt ist in dem dargestellten Ausführungsbeispiel eine Präzisionswaage 21 angeordnet, auf die die Gewichtskraft über das Magnetelement 3 und den Elektromagneten 4 übertragen werden und die ein der Gewichtskraft entsprechendes elektrisches Signal an eine Steuer-/Regeleinheit 6 übermittelt.

Das Gehäuse 10 ist in dem dargestellten Ausführungsbeispiel fluiddicht ausgeführt, weist aber einen Einlass 8 auf, durch den ein Gas, beispielsweise ein Messgas, in das Gehäuse 10 eingeführt werden kann und den Probenkörper 2 umspült. Außerdem ist ein Auslass 9 vorgesehen, durch den das Gas wieder entfernt werden kann. Mittels einer Zuführung 15 können zudem verschiedene Arten von Sensoren in einem Gehäuseinnenraum platziert werden, beispielsweise ein Temperatursensor. Alternativ oder zusätzlich kann auch eine Heizvorrichtung in dem Gehäuse 10 oder an dem Gehäuse 10 angeordnet sein. In dem dargestellten Ausführungsbeispiel ist das Gehäuse 10 in drei Kammern unterteilt. In einer oberen Kammer wird die Haltevorrichtung 1 bewegt, kann diese Kammer aber nicht verlassen, da eine untere, mit einem mittigen Loch versehene erste Auflage 16 sie daran hindert. Die Auflage 16 muss für den Betrieb in dem dargestellten Ausführungsbeispiel sehr präzise in einer vertikalen Position eingestellt sein, was üblicherweise nur durch ausgebildete Spezialisten möglich ist, mit den hier beschriebenen Verfahren jedoch auch durch normales Laborpersonal durchführbar ist. In einer unterhalb der oberen Kammer angeordneten mittleren Kammer ist der Probenkörper 2 angeordnet, der nach Aufnahme durch die Messlastabkopplung 13 der Haltevorrichtung 1 mit dieser innerhalb der mittleren Kammer auf und ab bewegt werden kann und eine inerte Probe aufweist, durch die die Dichte des in das Gehäuse 10 eingebrachten Messgases bestimmt wird, oder eine zusätzliche zu vermessende Probe.

Die mittlere Kammer wird begrenzt durch eine zweite Auflage 17, die ebenfalls ein mittiges Loch aufweist und präzise in ihrer vertikalen Position 4 eingestellt werden muss. In dem dargestellten Ausführungsbeispiel ist ein Probenkörper 14 mit der zu vermessenden Probe an dem Probenkörper 2 hängend in einer unterhalb der mittleren Kammer befindlichen unteren Kammer befestigt, so dass beliebige Gewichte auf den Probenkörper 2 wirken können. Der Probenkörper 14 ist dabei in der Regel als Tiegel ausgestaltet, in dem die zu vermessende Probe gelagert ist. Es kann vorgesehen sein, dass beispielsweise an der mittleren Kammer und der unteren Kammer Entnahmeöffnungen in dem Gehäuse 10 vorgesehen sind, so dass der inerte Probenkörper 2 und der Probenkörper 14 aus dem Gehäuse 10 entnommen und eingebracht werden können. Insbesondere ist vorgesehen, das Gehäuse 10 teilbar auszuführen, so dass eine freie Zugänglichkeit zu der Probe 2 und dem Probenkörper 14 gegeben ist. Innerhalb des Gehäuses 10 ist in der oberen Kammer umlaufend an einer Wand des Gehäuses 10 ein Positionssensor angeordnet, der über einen ortsfest an der Haltevorrichtung 1 befestigten Ferritkern als Sensorhülse 12 durch Induktion eine vertikale Position der Haltevorrichtung 1 und somit des ersten Probenkörpers 2 bzw. des zweiten Probenkörpers 14 bestimmt. In weiteren Ausführungsbeispielen kann der Positionssensor aber beispielsweise auch ein optischer Sensor sein. Der Positionssensor besteht in dem dargestellten Ausführungsbeispiel aus einer Sensorspule 5 und einer Sensorhülse 12, die ortsfest an der Haltevorrichtung 1 befestigt ist und somit einen definierten räumlichen Abstand zu dem Magnetelement 3 und dem inerten Probenkörper 2 aufweist.

Über eine Steuer-/Regeleinheit 6, die in dem dargestellten Ausführungsbeispiel außerhalb des Gehäuses 10 angeordnet ist, wird eine Energieversorgung des Elektromagneten 4 und des Positionssensors gewährleistet. Die als Mikrocontroller vorliegende Steuer-/Regeleinheit 6 ist hierbei über ein Kabel 18 mit dem Elektromagneten 4 verbunden. An dem Elektromagneten 4 ist in dem in Figur 1 gezeigten Ausführungsbeispiel ein Temperatursensor 11 angeordnet, der eine Temperatur des Elektromagneten 4 überwacht und kabelgebunden über ein Kabel 19 oder kabellos über eine Funkverbindung die Messwerte an die Steuer-/Regeleinheit 6 übermittelt. Sollte der Elektromagnet 4 überhitzen, kann die Steuer-/Regeleinheit 6 automatisiert die Strom- bzw. Spannungsbeaufschlagung anpassen und im Extremfall eine Abschaltung veranlassen. Der Positionssensor, genauer die Sensorspule 5, ist über ein Kabel 20 mit der Steuer-/Regeleinheit 6 verbunden, kann in weiteren Ausführungsbeispielen aber auch kabellos mit der Steuer-/Regeleinheit 6 verbunden sein. Statt des Temperatursensors 11 oder auch als Ergänzung dazu kann ein temperaturabhängiger elektrischer Widerstand einer Spulenwicklung des Elektromagneten 4 überwacht werden und somit ein Widerstandsthermometer eingesetzt werden.

Im Gegensatz zu bisherigen Lösungen, bei denen bei Erkennen eines Fehlerzustands der Elektromagnet 4 einfach abgeschaltet wurde, d. h. die elektrische Energiezufuhr unterbrochen wurde, wird bei dem dargestellten Ausführungsbeispiel zum Vermeiden eines daraus resultierenden instabilen Schwebezustands mit der daraus üblicherweise resultierenden Gefahr der Beschädigung der Probe 2 oder Schwebeeinrichtung ein anderes Verfahren angewandt: Die Sensorwerte bzw. wenigstens ein Sensorwert des Positionssensor werden zunächst von der Steuer-/Regeleinheit 6 auf Plausibilität geprüft, also beispielsweise darauf, ob alle Werte in einem vorgegebenen Wertebereich mit zu erwartenden Werten liegen. Wird ausgehend von der Plausibilitätsprüfung ein Fehlerzustand oder werden mehrere Fehlerzustände detektiert, wird durch die Steuer-/Regeleinheit 6 nachgeregelt. Nur falls diese Nachregelung nicht erfolgreich ist und auch weiterhin die Sensorwerte außerhalb des gewünschten Wertebereichs liegen, wird der Elektromagnet kontrolliert nach unten gefahren, so dass das Magnetelement 3 und die Haltevorrichtung 1 ebenfalls definiert und kontrolliert nach unten gefahren und abgesetzt werden. Erst wenn auch dieses kontrollierte Absetzen nicht funktioniert, wird auf die bisherige Lösung zurückgegriffen und der Elektromagnet 4 komplett abgeschaltet.

In dem in Figur 1 wiedergegebenen Ausführungsbeispiel ist die Steuer-/Regeleinheit 6 mit einem Überwachungselement ausgestattet, das eine elektrische Energieversorgung des Elektromagneten 4 und der Sensorspule 5 des Positionssensors und gegebenenfalls weiterer Bauteile überwacht. Während bei konventionellen Magnetschwebewaagen zwei Netzteile als elektrische Energieversorgungseinheiten zu je 15 V vorgesehen sind, wird in dem dargestellten Ausführungsbeispiel für einen digitalen Teil eine Spannung von +15 V durch einen Flyback-Schaltregler erzeugt, der über eine Diodenschaltung von der Steuer-/Regeleinheit 6 gesteuert seinen elektrischen Strom im Normalbetrieb aus den zwei Netzteilen bezieht. Bei einem Ausfall eines der beiden Netzteile kann dann automatisch durch das jeweils noch funktionierende Netzteil die elektrische Energieversorgung gewährleistet werden. Der elektrische Strom und die elektrische Spannung können hierbei durch das genannte Überwachungselement überwacht und durch die Steuer-/Regeleinheit 6 über eine mit dieser Einheit verbundene oder sogar an der Steuer-/Regeleinheit 6 angebrachte Ausgabeeinheit, beispielsweise ein Display, angezeigt werden.

Insgesamt ist die Energieversorgung im beschriebenen Ausführungsbeispiel somit dreiteilig aufgebaut: In einem Analogteil sind schnelle Regler untergebracht, die für die Schweberegelung benötigt werden. In einem Digitalteil ist die Steuerung der verschiedenen Zustände untergebracht. In einer Endstufe ist schließlich ein Verstärker eines Signals des Analogteils für den Elektromagneten angeordnet. Für den Analogteil und die Endstufe werden elektrische Spannungen von +15 V und -15 V benötigt, je nachdem, in welchem Schwebezustand das Magnetelement 3 sich gerade befindet. Beim Digitalteil wird nur eine elektrische Spannung von +15 V benötigt, d. h. die gesamte Magnetschwebewaage kann nicht mehr betrieben werden, sobald diese elektrische Spannung nicht mehr zur Verfügung steht. Durch das redundante Vorsehen von Energieversorgungseinheiten kann somit zumindest kurzfristig bei Ausfall einer der Einheiten noch ein Betrieb aufrechterhalten werden und die Magnetschwebewaage kontrolliert heruntergefahren werden, um eine Beschädigung und Probenverlust zu vermeiden.

Zudem ist in dem in Figur 1 dargestellten Ausführungsbeispiel auch vorgesehen, dass ein von dem Positionssensor übermitteltes elektrisches Spannungssignal bzw. elektrisches Stromsignal von der Steuer-/Regeleinheit 6 überwacht und während des Messvorgangs bei einem Überschreiten eines vorab festgelegten Messwerts eine Regelung durchgeführt wird. Dies kann beispielsweise der Fall sein, wenn eine Bewegung der Haltevorrichtung 1 detektiert wird, bei der die Gefahr besteht, dass die Messlastabkopplung 13 mit der ersten Auflage 16 in Kontakt kommt. Hierzu werden typischerweise alle elektrischen Spannungen von der Steuer-/Regeleinheit 6 erfasst und ausgewertet und initial automatisch eine Nullpunktposition angefahren, in der die Haltevorrichtung 1 schwebt. Ein in dieser Nullpunktposition gemessener Wert der elektrischen Sensorspannung des Positionssensors wird in einer mit der Steuer-/Regeleinheit 6 verbundenen Speichereinheit 7 gespeichert und die Haltevorrichtung 1 durch die Steuer-/Regeleinheit 6 und die Haltevorrichtung 1 ca. 1 mm höher gefahren. Über eine Absetzschraube kann die Position der Haltevorrichtung 1 weiter eingestellt werden, was in der Regel manuell geschieht. Der Weg des Magnetelements 3 und der Haltevorrichtung 1 wird in der Regel eingelernt, indem zunächst das Magnetelement 3 nach oben an das Gehäuse 10 gefahren, so dass lediglich das als Trennscheibe wirkende Gehäuse 10 zwischen dem an dem Gehäuse 10 anliegenden Magnetelement 3 und dem Elektromagneten 4 liegt. Anschließend wird das Magnetelement nach untern verfahren bis zu einer Position, in dem die Magnetkraft zum Halten gerade nicht mehr reichen würde. Durch diese zwei Positionen sind die obere Maximalposition und die untere Maximalposition definiert. Die Steuer-/Regeleinheit 6 weist hierbei typischerweise ein Computerprogramm auf, das bei Ausführen das beschriebene Verfahren durchführt bzw. die Magnetwaage ansteuert.

Zwischen diesen Positionen können nun Absetzpunkte für den Probenkörper 14 und den weiteren Probenkörper 2 bestimmt werden. Die Absetzpositionen werden benötigt, da nicht immer alle Proben gleichzeitig vermessen werden. So hängen typischerweise in einem Nullpunkt nur die Haltevorrichtung 1 und der Elektromagnet 3 an der Präzisionswaage 21, während die Probenkörper 2 und 14 auf den jeweiligen Absetzvorrichtungen positioniert sind. Wird das Magnetelement 3 etwas angehoben (wobei eine vertikale Positionsänderung des Magnetelements 3 in der Regel zwischen 2 mm und 3 beträgt), wird in der Regel der Probenkörper 14 aufgenommen, was einem ersten Messpunkt entspricht. Danach wird das Magnetelement 3 noch höher gefahren und der Probenkörper 2 wird aufgenommen, was einem zweiten Messpunkt entspricht.

Da somit elektrische Spannungswerte für zwei Messpunkte vorliegen, wird im Folgenden eine Zeit vom Beginn bis zum Sprung, d. h. eines Abhebens einer neuen Last durch den Probenkörper 13 registriert sowie eine Zeit nach dem Sprung bis zum Stillstand. Beide Zeiten sollten identisch sein, falls nicht, kann nach Umrechnung einer Zeitdifferenz in Umdrehungen der Absetzschraube einem Benutzer über die Ausgabeeinheit eine Anweisung zum Einstellen der Absetzschraube gegeben werden. Dieses Vorgehen kann auch bei unterschiedlichen Temperaturen im Gehäuseinnenraum gemacht werden, um eine temperaturabhängige Kraftabnahme des Magnetelements 3 auszugleichen.

Die beschriebene Prozedur kann zum Kalibrieren verwendet werden und wird typischerweise nach Ablauf einer vorherbestimmten Zeitdauer, beispielsweise alle 30 Sekunden, wiederholt.

Als weitere Maßnahme zum Erhöhen einer Betriebssicherheit werden von der Steuer-/Regeleinheit 6 durch die permanente und kontinuierliche Überwachung der Signale des Positionssensors frühzeitig Fehler erkannt, beispielsweise durch außerhalb eine vorgegebenen Intervalls liegende Messwerte, und ein kontrolliertes Herunterfahren kann durch die Steuer-/Regeleinheit 6 eingeleitet werden. Insbesondere kann vorgesehen sein, dass bei einem Ausfall der Energieversorgung der beschriebenen Magnetschwebewaage eine Schweberegelung noch ausreichend lange funktioniert, um die Haltevorrichtung 1 kontrolliert auf der ersten Auflage 16 abzusetzen. Dies kann beispielsweise durch eine sehr langsam erfolgende Entladung von hierfür vorgesehenen Speicherkondensatoren erfolgen. Nach einem Einschalten der Schweberegelung wird hierzu kontinuierlich ein Speicherkondensator oder mehrere Speicherkondensatoren als Stromspeicher geladen und bei Wegfall der Energiezufuhr an die Speicherkondensatoren diese gezielt entladen.

Auf der Auswerteeinheit kann bei Bedarf auch kontinuierlich die Schweberegelung der Haltevorrichtung 1 angezeigt werden und eine Justage kann über ein Bedienelement der Steuer-/Regeleinheit 6 vorgenommen werden. Der Signalverlauf des Positionssensors 5 wird kontinuierlich und ausreichend schnell erfasst und eine entsprechende Regelung von der Steuer-/Regeleinheit 6 vorgenommen. Dies kann beispielsweise über digitale Potentiometer erfolgen. Generell können in weiteren Ausführungsbeispielen alle relevanten Bauteile durch digital einstellbare Varianten ersetzt und direkt über die Steuer-/Regeleinheit 6 gesteuert bzw. geregelt werden.

Lediglich in den Ausführungsbeispielen offenbarte Merkmale der verschiedenen Ausführungsformen können miteinander kombiniert und einzeln beansprucht werden.

## Patentansprüche

1. Magnetschwebewaage mit
einer Haltevorrichtung (1) mit einer Messlastabkopplung (13) zum Aufnehmen einer zu vermessenden Probe (14),
einem an der Haltevorrichtung (1) angeordneten Magnetelement (3),
einem Elektromagneten (4) zum Ausüben einer Magnetkraft auf das Magnetelement (3),
einem Positionssensor mit einer Sensorspule (5) und einer an der Haltevorrichtung (1) angeordneten Sensorhülse (12) zum Ermitteln einer vertikalen Position des Magnetelements (3) und der Haltevorrichtung (1),
wobei die Haltevorrichtung (1), die zu vermessende Probe (14) und das Magnetelement (3) innerhalb eines Gehäuses (10) angeordnet sind und der Elektromagnet (4) außerhalb des Gehäuses (10) angeordnet ist, und
einer Steuer-/Regeleinheit (6), die dazu eingerichtet ist, eine elektrische Energieversorgung des Elektromagneten (4) und des Positionssensors zu gewährleisten und zu überwachen sowie die Haltevorrichtung (1) mit dem daran angeordneten Magnetelement (3) hinsichtlich einer definierten oder vorgegebenen vertikalen Position der Haltevorrichtung (1) zu kalibrieren und während eines Messvorgangs zu überwachen und so stabil zu halten, dass die Gewichtskraft über den Elektromagneten (4) und das Magnetelement (3) auf eine Präzisionswaage (21) übertragen werden kann, indemdie Steuer-/Regeleinheit (6) ein von dem Positionssensor übermitteltes elektrisches Spannungssignal und/oder ein von dem Positionssensor übermitteltes elektrisches Stromsignal überwacht und während des Messvorgangs bei Überschreiten und/oder Unterschreiten eines vorab definierten Grenzwerts eine Regelung durchführt, **dadurch gekennzeichnet, dass** die Steuer-/Regeleinheit (6) beim Durchführen der Regelung dazu ausgebildet ist, zumindest einen von dem Positionssensor übermittelten Sensorzustand auf Plausibilität zu prüfen und, falls ein Fehlerzustand detektiert wird, eine Nachregelung durchzuführen oder, falls die Nachregelung nicht möglich ist, das Magnetelement (3) mitsamt der Haltevorrichtung (1), der Messlastabkopplung (13) und der Probe (14) kontrolliert abzusetzen oder, falls die kontrollierte Absetzung nicht möglich ist, den Elektromagneten (4) komplett abzuschalten.

2. Magnetschwebewaage nach einem der vorhergehenden Ansprüche, **dadurch gekennzeichnet, dass** die Steuer-/Regeleinheit (6) während eines Kalibriervorgangs automatisiert mindestens zwei Positionen der Haltevorrichtung (1) durch den Elektromagneten (4) anfährt sowie ein von dem Positionssensor übermitteltes elektrisches Spannungssignal und/oder ein von dem Positionssensor elektrisches Stromsignal detektiert.

3. Magnetschwebewaage nach Anspruch 2, **dadurch gekennzeichnet, dass** die Steuer-/Regeleinheit (6) dazu eingerichtet ist, während des Kalibriervorgangs genau zwei Positionen anzufahren, von denen eine erste Position ein oberes Ende des Gehäuses (10) ist, in der das Magnetelement (3) einen minimalen Abstand zu dem Elektromagneten (4) aufweist und eine zweite Position eine untere Position ist, an der die von dem Elektromagneten (4) auf das Magnetelement (3) ausgeübte Kraft gerade ausreichend ist, um das Magnetelement (3) zu halten.

4. Magnetschwebewaage nach einem der vorhergehenden Ansprüche, **dadurch gekennzeichnet, dass** die Steuer-/Regeleinheit (6) dazu eingerichtet ist, den Elektromagneten (4) bei einem Ausfall der elektrischen Energieversorgung der Magnetschwebewaage über einen vorab definierten Zeitraum mit elektrischer Energie zu versorgen, so dass das Magnetelement (3) und damit die Haltevorrichtung (1) automatisiert in eine Ruheposition bewegbar ist.

5. Magnetschwebewaage nach einem der vorhergehenden Ansprüche, **dadurch gekennzeichnet, dass** an dem Elektromagneten (4) ein mit der Steuer-/Regeleinheit (6) verbundener Temperatursensor (11) zur Überwachung einer Temperatur des Elektromagneten (4) angeordnet ist und/oder ein Widerstandsthermometer Verwendung findet, das durch den temperaturabhängigen Widerstand einer Spulenwicklung des Elektromagneten (4) simultan zur Magnetkrafterzeugung eine elektrischen Widerstand detektiert, und die Steuer-/Regeleinheit (6) dazu eingerichtet ist, bei Überschreiten eines Temperaturgrenzwerts der Temperatur des Elektromagneten (4) diesen automatisiert in eine sichere Position zu verfahren und danach abzuschalten.

6. Magnetschwebewaage nach einem der vorhergehenden Ansprüche, **gekennzeichnet durch** eine oberhalb des Elektromagneten (4) angeordnete Präzisionswaage (21), die dazu eingerichtet ist, die über den Elektromagneten (4) und das Magnetelement (3) übertragene Gewichtskraft zu messen.

7. Magnetschwebewaage nach einem der vorhergehenden Ansprüche, **dadurch gekennzeichnet, dass** die Haltevorrichtung (1) dazu ausgebildet ist, zusätzlich zu der zu vermessenden Probe eine inerte Probe (2) zum Bestimmen der Dichte eines umgebenden Messgases aufzunehmen.

8. Verfahren zum Kalibrieren und Betreiben einer Magnetschwebewaage, bei dem eine Haltevorrichtung (1) mit einem an der Haltevorrichtung (1) angeordneten Magnetelement (3) durch eine Steuer-/Regeleinheit (6) hinsichtlich ihrer vertikalen Position kalibriert wird, indem die Haltevorrichtung (1) mit dem daran angeordneten Magnetelement (3) zu mindestens zwei Positionen durch einen Elektromagneten (4) translatorisch bewegt wird und an den Positionen das Magnetelement (3) durch den Elektromagneten (4), der eine Magnetkraft auf das Magnetelement (3) ausübt, gehalten wird, sowie durch einen Positionssensor eine jeweilige Position des Magnetelements (3) ermittelt wird, wobei nach dem Kalibrieren eine zu vermessende Probe (2) an der Haltevorrichtung (1) angebracht wird und die Position der Haltevorrichtung (1) durch die Steuer-/Regeleinheit (6) überwacht wird, wobei die Steuer-/Regeleinheit (6) eine elektrische Energieversorgung des Elektromagneten (4) und des Positionssensors gewährleistet und überwacht und ein von dem Positionssensor übermitteltes elektrisches Spannungssignal und/oder ein von dem Positionssensor übermitteltes elektrisches Stromsignal überwacht und während des Messvorgangs bei Überschreiten und/oder Unterschreiten eines vorab definierten Grenzwerts eine Regelung durchgeführt wird sowie beim Durchführen der Regelung zumindest ein von dem Positionssensor übermittelter Sensorzustand auf Plausibilität geprüft und, falls ein Fehlerzustand detektiert wird, eine Nachregelung durchgeführt wird oder, falls die Nachregelung nicht möglich ist, das Magnetelement (3) mitsamt der Haltevorrichtung (1), der Messlastabkopplung (13) und der Probe (14) kontrolliert abgesetzt oder, falls die kontrollierte Absetzung nicht möglich ist, der Elektromagnet (4) komplett abgeschaltet wird.

9. Computerprogrammprodukt mit einem Computerprogramm, das Softwaremittel zur Durchführung eines Verfahrens nach Anspruch 8 und/oder zum Ansteuern einer Magnetschwebewaage nach einem der Ansprüche 1 bis 7 aufweist, wenn das Computerprogramm in einem Automatisierungssystem ausgeführt wird.

## Claims

1. Magnetic suspension balance comprising
a holding device (1) with a measurement load coupling means (13) for receiving a sample (14) to be measured,
a magnet element (3) arranged on the holding device (1),
an electromagnet (4) for exerting a magnetic force on the magnet element (3),
a position sensor with a sensor coil (5) and a sensor sleeve (12) arranged on the holding device (1) to ascertain a vertical position of the magnet element (3) and of the holding device (1),
wherein the holding device (1), the sample (14) to be measured and the magnet element (3) are arranged inside a housing (10) and the electromagnet (4) is arranged outside the housing (10), and
an open-loop/closed-loop control unit (6), which is set up to ensure and to monitor an electrical energy supply of the electromagnet (4) and of the position sensor and also to calibrate the holding device (1), with the magnet element (3) arranged thereon, in respect of a defined or predetermined vertical position of the holding device (1) and to monitor this during a measurement process and thus keep it stable enough that the weight force may be transferred via the electromagnet (4) and the magnet element (3) to a precision balance (21) by the open-loop/closed-loop control unit (6) monitoring an electrical voltage signal transmitted from the position sensor and/or an electrical current signal transmitted from the position sensor and performing, during the measurement process, a control operation in the event that a previously defined limit value is exceeded or undershot, **characterized in that** the open-loop/closed-loop control unit (6), when performing the control operation, is configured to check the plausibility of at least one sensor state transmitted from the position sensor and, if an error state is detected, to perform a readjustment, or, if the readjustment is not possible, to set down the magnet element (3) together with the holding device (1), the measuring load coupling means (13) and the sample (14) in a controlled fashion, or, if the controlled setdown is not possible, to switch off the electromagnet (4) completely.

2. The magnetic suspension balance according to any one of the preceding claims, **characterized in that** the open-loop/closed-loop control unit (6), during a calibration process, automatically establishes at least two positions of the holding device (1) by the electromagnet (4) and also detects an electrical voltage signal transmitted from the position sensor and/or an electrical current signal transmitted from the position sensor.

3. The magnetic suspension balance according to claim 2, **characterized in that** the open-loop/closed-loop control unit (6) is set up such that, during the calibration process, precisely two positions are assumed, of which a first position is an upper end of the housing (10), in which the magnet element (3) has a minimum distance from the electromagnet (4), and a second position is a lower position, at which the force exerted by the electromagnet (4) onto the magnet element (3) is just sufficient to hold the magnet element (3).

4. The magnetic suspension balance according to any one of the preceding claims, **characterized in that** the open-loop/closed-loop control unit (6) is set up to supply electrical energy to the electromagnet (4) in the event of a failure of the electrical energy supply of the magnetic suspension balance over a previously defined period of time, so that the magnet element (3) and thus the holding device (1) is automatically movable into a rest position.

5. The magnetic suspension balance according to any one of the preceding claims, **characterized in that** a temperature sensor (11) connected to the open-loop/closed-loop control unit (6) for monitoring a temperature of the electromagnet (4) is arranged on the electromagnet (4) and/or a resistance thermometer is used, which, simultaneously to the magnetic force generation, detects an electrical resistance by the temperature-dependent resistance of a coil winding of the electromagnet (4), and the open-loop/closed-loop control unit (6) is set up, when a temperature limit value of the temperature of the electromagnet (4) is exceeded, to move the latter automatically into a safe position and then to switch it off.

6. The magnetic suspension balance according to any one of the preceding claims, **characterized by** a precision balance (21), which is arranged above the electromagnet (4) and which is set up to measure the weight force transferred via the electromagnet (4) and the magnet element (3).

7. The magnetic suspension balance according to any one of the preceding claims, **characterized in that** the holding device (1) is configured to receive, in addition to the sample to be measured, also an inert sample (2) to determine the density of a surrounding measurement gas.

8. A method for calibrating and operating a magnetic suspension balance, in which a holding device (1) with a magnet element (3) arranged on the holding device (1) is calibrated in respect of its vertical position by an open-loop/closed-loop control unit (6) as a result of the holding device (1) with the magnet element (3) arranged thereon being moved in translation to at least two positions by an electromagnet (4) and the magnet element (3) being held at the positions by the electromagnet (4), which exerts a magnetic force onto the magnet element (3), and also a respective position of the magnet element (3) being ascertained by a position sensor, wherein, after the calibration, a sample (2) to be measured is attached to the holding device (1) and the position of the holding device (1) is monitored by the open-loop/closed-loop control unit (6), wherein the open-loop/closed-loop control unit (6) ensures and monitors an electrical energy supply of the electromagnet (4) and of the position sensor and monitors an electrical voltage signal transmitted from the position sensor and/or an electrical current signal transmitted from the position sensor, and, during the measurement process, a control operation is performed in the event that a previously defined limit value is exceeded or undershot, and, when the control operation is performed, the plausibility of at least one sensor state transmitted from the position sensor is checked, and, if an error state is detected, a readjustment is performed, or, if the readjustment is not possible, the magnet element (3) together with the holding device (1), the measuring load coupling means (13) and the sample (14) is set down in a controlled fashion, or, if the controlled setdown is not possible, the electromagnet (4) is switched off completely.

9. A computer program product with a computer program which comprises software means for carrying out a method according to claim 8 and/or for controlling a magnetic suspension balance according to any one of claims 1 to 7 when the computer program is run in an automation system.

## Revendications

1. Balance à sustentation magnétique avec
un dispositif de maintien (1) avec un découplage de charge de mesure (13) pour recevoir un échantillon à mesurer (14),
un élément magnétique (3) disposé sur le dispositif de maintien (1),
un électroaimant (4) pour exercer une force magnétique sur l'élément magnétique (3),
un capteur de position avec une bobine de capteur (5) et un manchon de capteur (12) disposé sur le dispositif de maintien (1) pour déterminer une position verticale de l'élément magnétique (3) et du dispositif de maintien (1),
dans laquelle le dispositif de maintien (1), l'échantillon à mesurer (14) et l'élément magnétique (3) sont disposés à l'intérieur d'un boîtier (10) et l'électroaimant (4) est disposé à l'extérieur du boîtier (10), et
une unité de commande/régulation (6), qui est conçue pour garantir et pour surveiller une alimentation en énergie électrique de l'électroaimant (4) et du capteur de position ainsi que pour étalonner le dispositif de maintien (1) avec l'élément magnétique (3) disposé sur celui-ci en ce qui concerne une position verticale définie ou prédéfinie du dispositif de maintien (1) et pour le surveiller et pour le maintenir stable pendant un processus de mesure de manière à ce que le poids puisse être transmis à une balance de précision (21) par l'intermédiaire de l'électroaimant (4) et de l'élément magnétique (3), du fait que l'unité de commande/régulation (6) surveille un signal de tension électrique transmis par le capteur de position et/ou un signal de courant électrique transmis par le capteur de position et met en oeuvre une régulation pendant le processus de mesure en cas de dépassement et/ou de non-atteinte d'une valeur limite définie au préalable, **caractérisée en ce que** l'unité de commande/régulation (6) est réalisée, lors de la mise en oeuvre de la régulation, pour vérifier la plausibilité d'au moins un état de capteur transmis par le capteur de position et, si un état d'erreur est détecté, pour mettre en oeuvre une régulation ultérieure ou, si la régulation ultérieure n'est pas possible, pour déposer de manière contrôlée l'élément magnétique (3) avec le dispositif de maintien (1), le découplage de charge de mesure (13) et l'échantillon (14) ou, si la dépose contrôlée n'est pas possible, pour déconnecter complètement l'électroaimant (4).

2. Balance à sustentation magnétique selon l'une quelconque des revendications précédentes, **caractérisée en ce que** l'unité de commande/régulation (6) approche de manière automatisée au moins deux positions du dispositif de maintien (1) par l'électroaimant (4) pendant un processus d'étalonnage et détecte un signal de tension électrique transmis par le capteur de position et/ou un signal de courant électrique transmis par le capteur de position.

3. Balance à sustentation magnétique selon la revendication 2, **caractérisée en ce que** l'unité de commande/régulation (6) est conçue pour at-teindre exactement deux positions pendant le processus d'étalonnage, dont une première position est une extrémité supérieure du boîtier (10), dans laquelle l'élément magnétique (3) est à une distance minimale de l'électroaimant (4) et une deuxième position est une position inférieure, dans laquelle la force exercée par l'électroaimant (4) sur l'élément magnétique (3) est juste suffisante pour maintenir l'élément magnétique (3).

4. Balance à sustentation magnétique selon l'une quelconque des revendications précédentes, **caractérisée en ce que** l'unité de commande/régulation (6) est conçue pour alimenter l'électroaimant (4) en énergie électrique pendant une durée définie au préalable en cas de panne de l'alimentation en énergie électrique de la balance à sustentation magnétique, de sorte que l'élément magnétique (3) et donc le dispositif de maintien (1) peuvent être déplacés de manière automatisée dans une position de repos.

5. Balance magnétique selon l'une quelconque des revendications précédentes, **caractérisée en ce qu'**un capteur de température (11) relié à l'unité de commande/régulation (6) est disposé sur l'électroaimant (4) pour surveiller une température de l'électroaimant (4) et/ou un thermomètre à résistance est utilisé, qui détecte à l'aide de la résistance dépendant de la température d'un enroulement de bobine de l'électroaimant (4) simultanément par rapport à la production de force magnétique une résistance électrique, et l'unité de commande/régulation (6) est conçue pour, en cas de dépassement d'une valeur limite de température de la température de l'électroaimant (4), déplacer celui-ci de manière automatisée dans une position de sécurité et le déconnecter ensuite.

6. Balance à sustentation magnétique selon l'une quelconque des revendications précédentes, **caractérisée par** une balance de précision (21) disposée au-dessus de l'électroaimant (4), qui est conçue pour mesurer la force pondérale transmise par l'intermédiaire de l'électroaimant (4) et de l'élément magnétique (3).

7. Balance à sustentation magnétique selon l'une quelconque des revendications précédentes, **caractérisée en ce que** le dispositif de maintien (1) est réalisé pour recevoir, en plus de l'échantillon à mesurer, un échantillon inerte (2) pour déterminer la densité d'un gaz de mesure environnant.

8. Procédé pour étalonner et faire fonctionner une balance à sustentation magnétique, selon lequel un dispositif de maintien (1) avec un élément magnétique (3) disposé sur le dispositif de maintien (1) est étalonné par une unité de commande/régulation (6) en ce qui concerne sa position verticale, du fait que le dispositif de maintien (1) avec l'élément magnétique (3) disposé sur celui-ci est déplacé en translation vers au moins deux positions par un électroaimant (4) et l'élément magnétique (3) est maintenu dans les positions par l'électroaimant (4), qui exerce une force magnétique sur l'élément magnétique (3), et une position respective de l'élément magnétique (3) est déterminée par un capteur de position, dans laquelle un échantillon (2) à mesurer est placé sur le dispositif de maintien (1) après l'étalonnage et la position du dispositif de maintien (1) est surveillée par l'unité de commande/régulation (6), dans laquelle l'unité de commande/régulation (6) garantit une alimentation en énergie électrique de l'électroaimant (4) et du capteur de position et surveille un signal de tension électrique transmis par le capteur de position et/ou un signal de courant électrique transmis par le capteur de position et, pendant le processus de mesure, une régulation est mise en oeuvre en cas de dépassement et/ou de non-atteinte d'une valeur limite définie au préalable et, lors de la mise en oeuvre de la régulation, la plausibilité d'au moins un état de capteur transmis par le capteur de position est vérifiée et, si un état d'erreur est détecté, une régulation ultérieure est mise en oeuvre ou, si la régulation ultérieure n'est pas possible, l'élément magnétique (3) est déposé de manière contrôlée avec le dispositif de maintien (1), le découplage de charge de mesure (13) et l'échantillon (14) ou, si la dépose contrôlée n'est pas possible, l'électroaimant (4) est complètement déconnecté.

9. Produit programme d'ordinateur avec programme d'ordinateur, qui présente des moyens logiciels pour la mise en oeuvre d'un procédé selon la revendication 8 et/ou pour la commande d'une balance à sustentation magnétique selon l'une quelconque des revendications 1 à 7, lorsque le programme d'ordinateur est exécuté dans un système d'automatisation.
